# EUROPEAN PATENT APPLICATION

(11) **EP 2 674 879 A1**
(43) Date of publication of application: **18.12.2013**
(21) Application number: 13159700.7
(22) Date of filing: 18.03.2013
(51) Int. Cl.: G06F 17/30

(54) **System for and method of reminisce and venerate the deceased in a memorial facility**

(30) Priority: 12.06.2012 CN 201220275336 U; 04.07.2012 EP 12175011; 03.08.2012 CN 201210275559
(71) Applicant: Good Ba Ba Technology Group Limited, Twun Tong, KLN Hong Kong (CN)
(72) Inventor: Yuen, Se Kit, Kwun Tong, KLN Hong Kong (CN)
(74) Representative: Ward, David Ian

(57) **Abstract**

A commemoration system 200 for remote commemoration of the deceased with remains interred in a memorial facility 100, comprising a computer server 201 to serve a request of a computing device 204; a data storage 203 for storing data useful for commemoration of the deceased, the data storage 203 being accessible by said computing device 204 under the control of the computer server 201; a data processing unit for converting data from the data storage 203 into a human-perceivable event; a transmitter for transmitting a said human-perceivable event to the memorial facility 100, said human-perceivable event being controllable by means of said computing device 204; and an output device 202 at the memorial facility 100 for communicating a said human-perceivable event transmitted by the transmitter.

## Description

The present invention relates to a system for reminiscing and venerating the deceased and a method of implementing the system.

### BACKGROUND OF THE INVENTION

There are many different types of memorial facilities for the livings to reminisce and venerate the deceased. Some of the examples are columbarium, cemetery, memorial wall, ancestral hall and the like.

A columbarium is a place for the respectful and usually public storage of urns containing the cremated remains of the deceased. The urns are normally stored within a plurality of storages walls. A columbarium can be built underground like those built in Roman Empire. Today's columbarium can be either free standing units, or part of a mausoleum or another facility. In some cases, columbarium is built into church structures like the Cathedral of our Lady of Angels in Los Angeles, California. In addition to Christianity, in Buddhism, ashes of the deceased may be placed in a columbarium (in Japanese Buddism, a nokotsudo), which can be either attached to or a part of Buddhist temple or cemetery. This practice allows for the family of the deceased to visit the temple for the conduct of tradition memorials and ancestor rites. Scarcity of land has prompted the increase popularity of cremation especially for highly populated metropolitan city in Asia such as Tokyo, Hong Kong and etc. In Hong Kong, there are different proposal of building more columbarium, one example proposes building a large scale columbarium in one of the many outlaying islands. Another example proposes construction of a high rise columbarium building. Thus the columbarium can be of many different form and shapes.

A cemetery is an area where the remains of deceased people are buried or are otherwise interred. The remains may be interred in a grave, tomb, sarcophagus, a mausoleum, columbarium, or other edifice. Modern cemeteries often include crematoria, and memorial walls. At times, when the remains of deceased can not be found due to many reasons: casualty at war, disaster such as earthquake and tsunami, airplane crash at sea and etc.; thus plaque with name and some basic information of the deceased will be installed on the memorial walls.

Similar to memorial plaque on the memorial walls, in Asian countries, a wooden block with names of the ancestors presented as ancestral tablet is used. One reason of using ancestral tablet is that descendent can place ancestral tablet at home as a symbolization of having the soul of the deceased at home together with the family. Another very common practice is placing the tablets with the other ancestors inside an ancestral hall as a symbolization of re-union of all the deceased ancestors. Normally, the ancestral hall is located at the home town where the family originated from. There are times, memorial plaque or ancestral tablets are also placed in a shrine; a way for the soul of the deceased to be closer to holy land.

The memorial facility, whether for atheist or religious, in any form and size, is a place for the living to reminisce the deceased person. It is so important in human civilization to reminisce the deceased person that most country dedicate one national holiday each year for the living have time visiting the memorial facility to reminisce the deceased. For example there is the Memorial Day in U.S., Remembrance Sunday in U.K. Qing Ming Festival in China to name a few. Commemorate practice differs in different cultures and religious. For example, in Western countries, offering such as flowers are often placed and candles is burn in the memorial facility. In Asian countries, other offering such as food is often placed and incense is burn in the memorial facility. Some Asian countries will even burn imitated items that are made of paper such as, bank notes, houses and other goods as a way of sending the items to the deceased to use in the afterlife. For religious people, holy scripture are read and prayers are made. For atheist, poem or letters may be read out.

All these current practices are no doubt important as a way of reminisce and venerate the deceased. However, these practices have constraints in location, time, cost and etc. These practices also waste huge amount of natural resources create toxic pollution.

Whether in urban or rural areas, memorial facilities are normally located distance away from population center due to cost of land, environmental or religious (want to be a quiet place) reasons. In addition, with modern globalization, people often migrate to other countries or relocate to other cities; making frequent visits to the memorial facilities difficult if not impossible.

Furthermore, the busy work schedule of the descendants often makes them not able to visit the memorial facility on special days such as birthday, wedding anniversary and etc. of the deceased love ones. One day per year from the national holiday simply not enough, for descendants to fully pay tribute to the deceased.

Each year, large amount of money is spent in purchasing offerings and other veneration materials mentioned earlier. Most of the offerings will be trashed or burn after the veneration process. Although there is no consolidated figure, but it is estimated that billions of dollars has been spent on Qing Ming Festivals in China alone in one day. Also in Taiwan alone, two hundreds and eighty tons of paper-made offerings has been burn releasing at lease one hundred and eighty tons of carbon dioxide every year. Research carried out in Taiwan in 2001 links the burning of incense sticks to the slow accumulation of potential carcinogens in a poorly ventilated environment by measuring the levels of polycyclic aromatic hydrocarbons (including benzopyrene) within Buddhist temples.

In addition to the problems listed above, most of the current memorial facilities reveal limited information about the deceased such as name, time of living or with a photo at the most; making ancestor' s history preservation difficult. This defeats another reason of veneration practice, educating the younger generation about the great good deeds of the ancestors while paying tribute to the ancestors. Many times, there is a fuzzy memory if any about the ancestors exists for the younger generation. In time, this will weakens the connection within a family; potentially break up the link in family.

There are different prior arts in fields such as commemorate the deceased, building a family tree, construction of the memorial facilities and etc. None teaches a complete environmental friendly solution of reminiscing and venerating the deceased while building stronger family link and overcome distance, time and language barrier at time same time.

The invention seeks to mitigate or at least alleviate such problems.

### SUMMARY OF THE INTENTION

According to a first aspect of the invention, there is provided a commemoration system for remote commemoration of the deceased with remains interred in a memorial facility, comprising: a computer server to serve a request of a computing device; a data storage for storing data useful for commemoration of the deceased, the data storage being accessible by said computing device under the control of the computer server; a data processing unit for converting data from the data storage into a human-perceivable event; a transmitter for transmitting a said human-perceivable event to the memorial facility, said human-perceivable event being controllable by means of said computing device; and an output device at the memorial facility for communicating a said human-perceivable event transmitted by the transmitter.

Preferably, the output device comprises a plurality of output devices located in the vicinity of the memorial facility, each being assigned to a respective deceased with remains interred in the memorial facility.

It is preferable that the commemoration system further comprises a computing device.

Preferably, the computing device includes an output device.

More preferably, the plurality of output devices located at the memorial facility are accessible by the computing device.

It is preferable that the commemoration system includes a common computing device located at the memorial facility, by which the plurality of output devices are selectively accessible.

Advantageously, the computing device comprises a remote computing device connectable with the system via a communication network.

It is advantageous that the commemoration system further comprises a broadcast mechanism which captures a said human-perceivable event communicated by the output device located at the memorial facility and sends a captured human-perceivable event to the computing device via the communication network.

Preferably, the broadcast mechanism comprises an input device for capturing a said human-perceivable event communicated by the output device located at the memorial facility.

More preferably, the input device is located in proximity to the output device located at the memorial facility.

Advantageously, the input device comprises a camera.

More advantageously, the remote computing device comprises a third party computing device.

Yet more advantageously, the data in the data storage is capable of being added, edited and deleted by a user by means of the computing device.

Preferably, the data useful for commemoration of the deceased comprises various data content which is selectable by the computing device for conversion into a human-perceivable event by the data processing unit and transmissible by the transmitter to the output device for communication.

More preferably, the data comprises data relating to the deceased and the deceased's family and data relating to offering.

Yet more preferably, the communication network comprises the internet or a telecommunication network.

Advantageously, the computer server comprises a web server.

More advantageously, the output device comprises a visual display capable of communicating animation.

Yet more advantageously, the output device comprises an audio display.

In a further aspect of the invention, there is provided a method of remote commemoration of the deceased with remains interred in a memorial facility, through the use of a computing device, comprising the steps of:
(a) providing a computer server to serve a request of said computing device;
(b) providing a data storage for storing data useful for commemoration of the deceased, the data storage being accessible by said computing device under the control of the computer server;
(c) providing a data processing unit to convert data from the data storage into a human-perceivable event;
(d) providing a transmitter to transmit a said human-perceivable event to the memorial facility, said human-perceivable event being controllable by means of said computing device; and
(e) providing an output device at the memorial facility to communicate a said human-perceivable event transmitted by the transmitter.

Preferably, the output device comprises a plurality of output devices located in the vicinity of the memorial facility, each being assigned to a respective deceased with remains interred in the memorial facility.

It is preferable that the method further comprises the step of providing a computing device.

Preferably, the computing device includes an output device.

More preferably, the plurality of output devices located at the memorial facility are accessible by the computing device.

Yet more preferably, the step of providing a common computing device located at the memorial facility, by which the plurality of output devices are selectively accessible.

Advantageously, the computing device comprises a remote computing device connectable with the system via a communication network.

It is advantageous that the method further comprises the step of providing a broadcast mechanism which captures a said human-perceivable event communicated by the output device located at the memorial facility and sends a captured human-perceivable event to the computing device via the communication network.

Advantageously, the broadcast mechanism comprises an input device for capturing a said human-perceivable event communicated by the output device located at the memorial facility.

More advantageously, the input device is located in proximity to the output device located at the memorial facility.

Yet more advantageously, the input device comprises a camera.

Preferably, the remote computing device comprises a third party computing device.

More preferably, the data in the data storage is capable of being added, edited and deleted by a user by means of the computing device.

Yet more preferably, the data useful for commemoration of the deceased comprises various data content which is selectable by the computing device for conversion into a human-perceivable event by the data processing unit and transmissible by the transmitter to the output device for communication.

Advantageously, the data comprises data relating to the deceased and the deceased's family and data relating to offering.

More advantageously, the communication network comprises the internet or a telecommunication network.

Yet more advantageously, the computer server comprises a web server.

Preferably, the output device comprises a visual display capable of communicating animation.

More preferably, the output device comprises an audio display.

### BRIEF DESCRIPTION OF DRAWINGS

The invention will now be more particularly described, by way of example only, with reference to the accompanying drawings, in which:
Figures 1 to 4 are front views of memorial facilities such as church and temples.
Figures 5 to 8 are schematic representation of different memorial facilities implemented with different embodiments of the system or method in accordance with the invention;
Figure 9A is an illustration of a part of the system or method in Figure 8;
Figure 9B is an enlarged illustrations of a part of the system or method in Figure 9A;
Figure 10A is a schematic representation of a front view of a unit of the part of the system or method in Figures 9A and 9B;
Figure 10B is a schematic representation of a top plan view of the unit of Figure 10A;
Figure 10C is a schematic representation of a front view of the unit of Figure 10A, with front door opened;
Figure 10D is a schematic representation of a top plan view of the unit of Figure 10C;
Figure 10E is a schematic representation of a cross-sectional view of the unit of Figure 10A taken along a side of the unit;
Figures 11 to 13 are a schematic representation of different memorial facilities implemented with further embodiments of the system or method in accordance with the invention;
Figure 14 is a block diagram of an embodiment of the system or method in accordance with the invention;
Figure 15 is a schematic illustration of an embodiment of the system or method in Figures 8, 9A and 9B;
Figure 16 is a block diagram of a computer system employed in the embodiments of the system or method in Figures 5 to 8;
Figure 17 is a block diagram of the embodiments of the system or method in Figures 5 to 8;
Figure 18 is a block diagram illustrating a main user interface of the system or method in Figures 5 to 8;

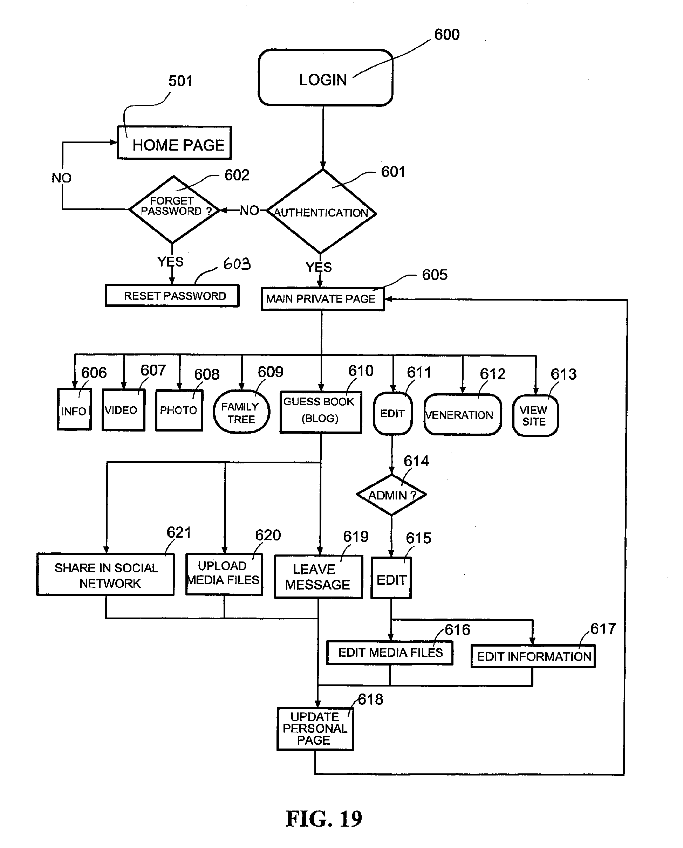

Figure 19 is a block diagram illustrating the processing flow after login function in Figure 18 is activated;
Figure 20 is a block diagram illustrating the processing flow after veneration function in Figure 19 is activated;
Figures 21A, 21B, 21C, 22A, 22B, 22C, 23, 24, 25 and 26 are schematic representation of a display on the front door of Figures 10A to 10E;

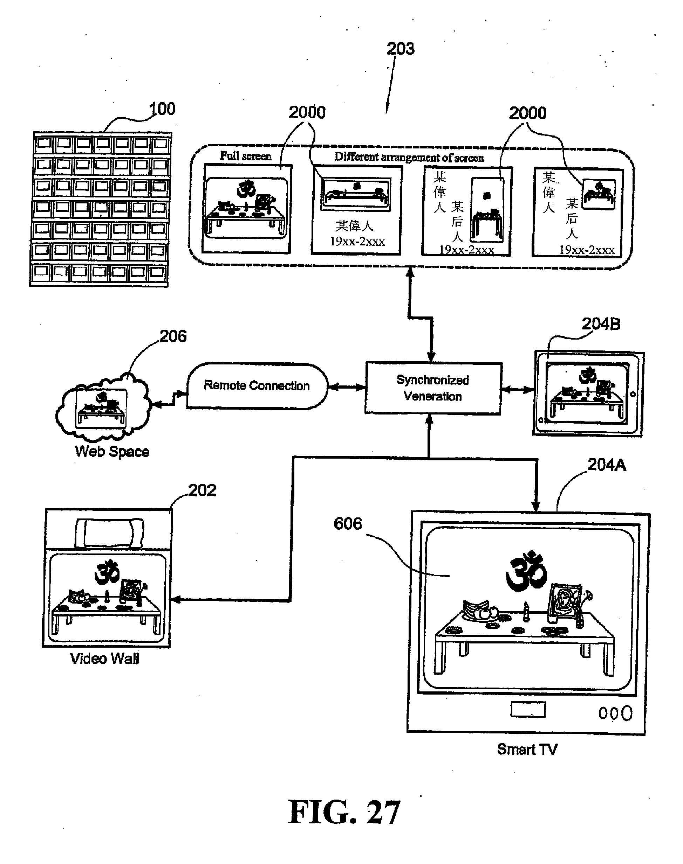

Figure 27 is a schematic representation of a synchronized local and remote veneration in the system or method in Figures 8, 9A and 9B;
Figure 28 is a block diagram illustrating the processing flow after view site function in Figure 19 is activated;
Figure 29 is a block diagram illustrating the processing flow after family tree function in Figure 19 is activated; and
Figure 30 is a schematic representation of a family tree display on the front door of Figures 10A to 10E.

### DETAILED DESCRIPTION OF PREFERRED EMBODIMENT

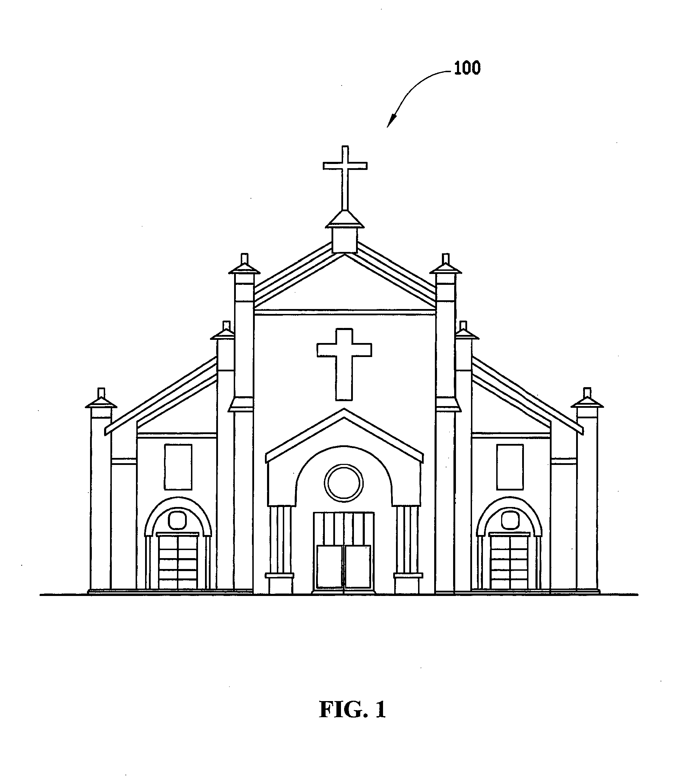

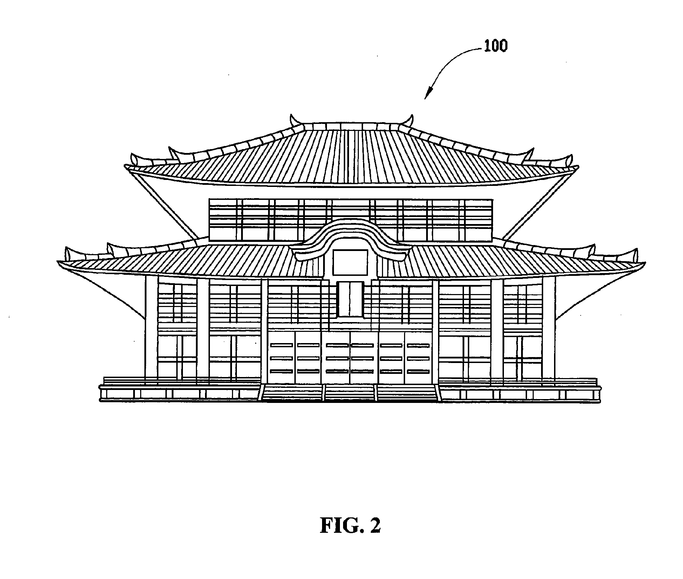

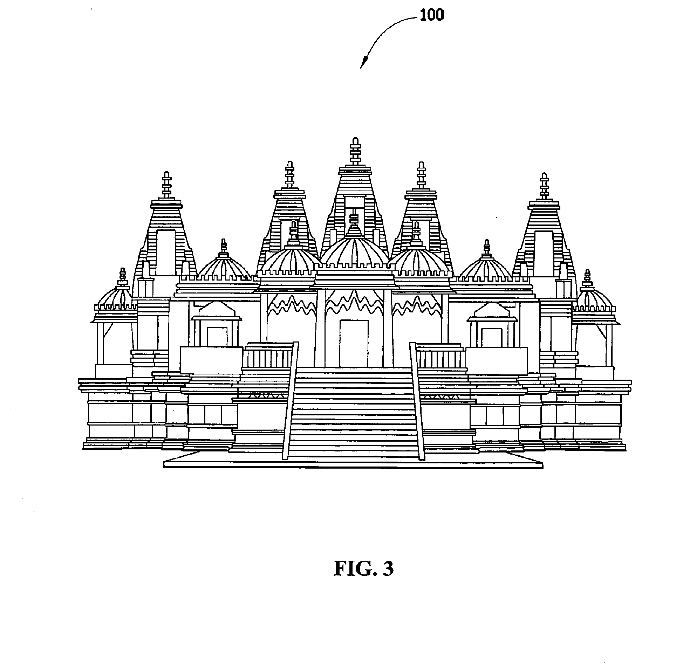

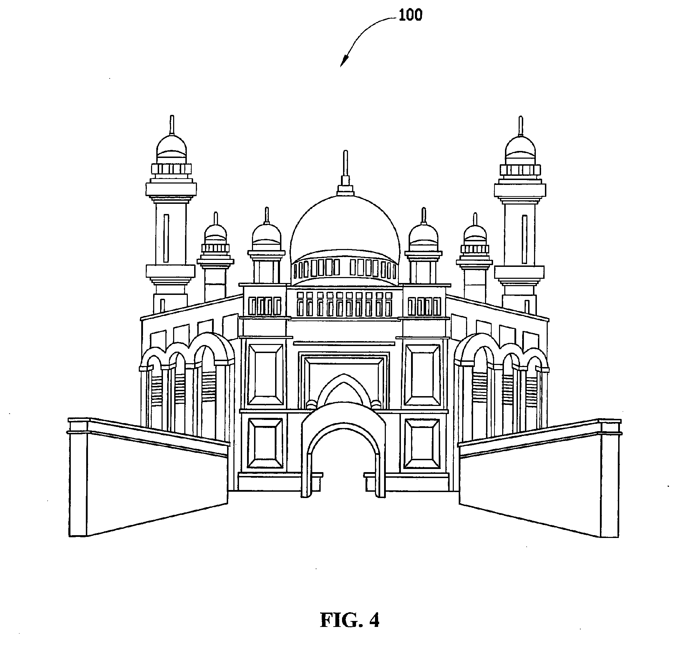

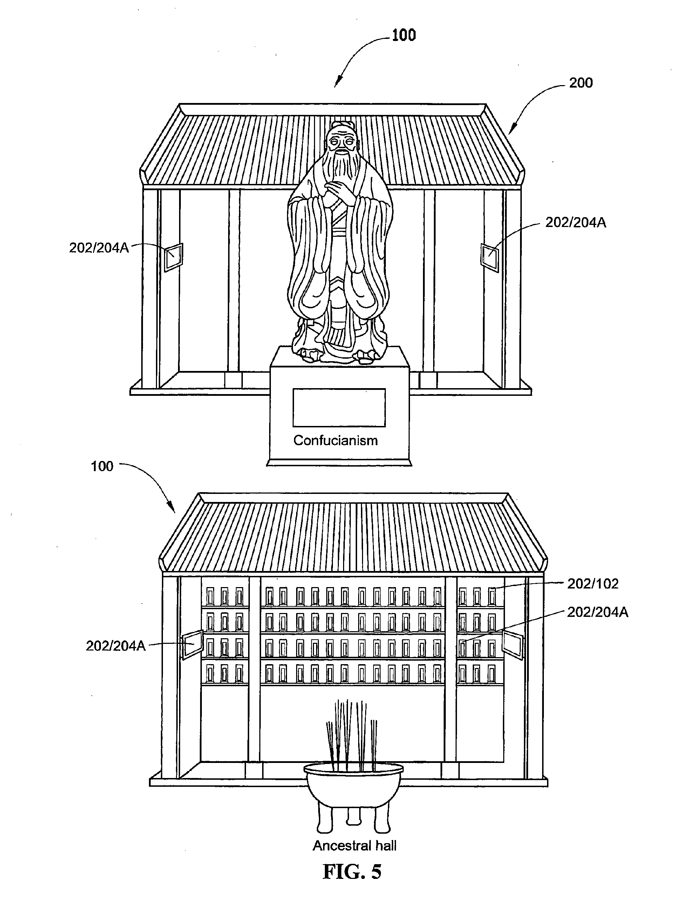

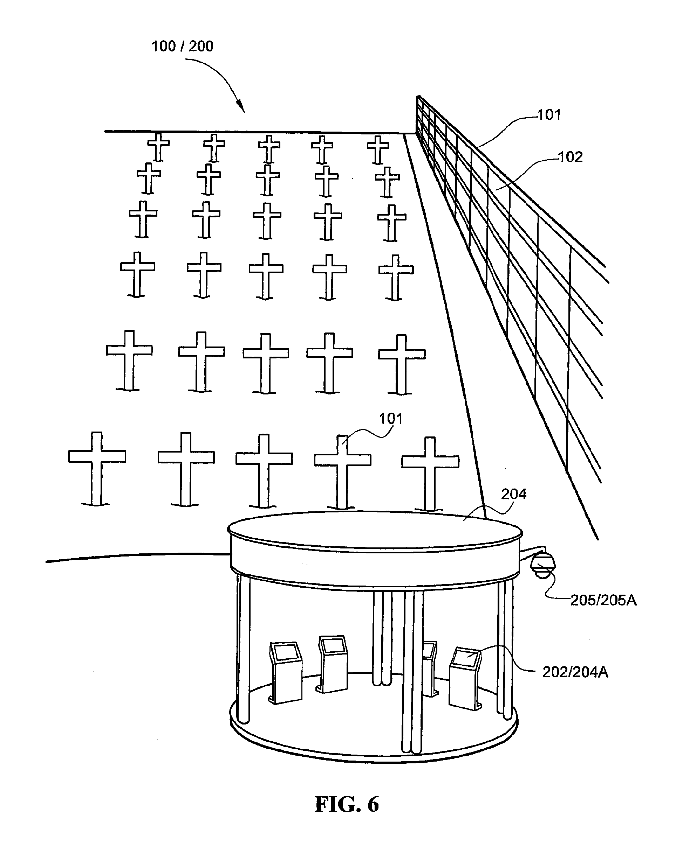

Referring to the drawings, there is a shown a memorial facility 100 embodying the invention. The invention is a system 200 or a method for remote commemoration of the deceased with remains interred in a memorial facility 100. The memorial facility 100 can be of any kind including a church as shown in Figure 1, a temple as shown in Figures 2 and 3, a mosque as shown in Figure 4, an ancestral hall or temple as shown in Figure 5, a cemetery as shown in Figure 6 or a columbarium 7.

As shown in Figures 5 to 8, the system 200 or method includes a number of components, a computer server 201, a transmitter, an output device 202, data storage 203, a data processing unit which may be provided with the computer server 201 and a computing device 204. The computer server 201 is preferably a web server such that control of the computer server 201 can be conducted by the computing device 204 remotely and without physical connection (for example wirelessly) or, locally with physical connection when the computing device 204 is a common or general computing device 204. The output device 202 is preferably a video and audio outputs 202A and 202B such as a LCD with audio system. Such an output device 202 allow information of the deceased or animation such as a burning candle to be displayed/communicated thereon upon request of the computing device 204 sent by a user. The data storage 203, which may be provided with the computer server 201 contains for example information of the deceased and data for creating animation display on the output device 202. The data processing unit is in connection with the data storage 203 to convert data stored in the data storage into human-perceivable event. The transmitter transmits the human-perceivable event to the memorial facility 100. The human-perceivable event is controllable by the computing device 204. The human-perceivable event is communicated for viewing by the output device 202. Finally the computing device 204 is a controller of the system 200 useful in controlling for example what is to be displayed on the output device 202. The computing device 204 may include an output device 202. The computing device 204 may be a part of the system 200 or method, local (located in the memorial facility 100 as a common computing device) or remote, and may be a third party remote computing device (smart phone such as an ipad or iphone). It may be physically connected to the computer server 201 or it can be a remote computing device 204 connectable with the computer server 201 through wireless connection and being located in the memorial facility 100. Preferably, the computer server 201, the output device 202 and the computing device 204 are connected to one another through a computer network which may be an intranet or the internet.

It is possible to view the human-perceivable event on the computing device 204. One way of doing it is to have an output device 202 on the computing device 204. The human-perceivable event is transmitted by the transmitter to the output device 202 of the computing device 204 at the same time when the event is transmitted to the output device 202 located at the memorial facility 100.

The data processing unit and the transmitter may be provided with the computing device 204.

In another preferred embodiment, the system 200 or method includes a broadcast mechanism 205. The broad mechanism 205 allows the human-perceivable event communicated by the output device 202 located in the memorial facility 100 to be broadcast to and accessible by the computing device 204 under the control of the computer server 201. The broadcast mechanism 205 includes an input device 205A that is capable of capturing the communication of the output device 202 and sends it to the remote computing device 204 through the computer network. There will be a time lag between the communication by output device 202 at the memorial facility 100 and the communication by computing device 204. Preferably the input device 205A is a video and audio input device such as a camera with audio input. The computing device 204 is able to communicate human-perceivable event to the user as well as allowing request from the user to be sent to the system 200. The computing device 204 may be a computing device 204 located at the memorial facility 100 and/or a remote computing device 204. As mentioned, it may well be a third party device such as an iPhone or an iPad.

As shown in Figure 5, a typical Chinese ancestor hall 100 is shown. Each of the memorial platelet 102 is placed in the hall 100 with their own output device 202. A local computing device 204A stationed in the ancestor hall 100 is provided for sending request and a selected veneration in a human-perceivable form. The local computing device 204A is switchable to the output devices 202 or the output device 202 is accessible by the local computing device 204A. It has an output device 202 to allow the human-perceivable event of veneration to be communicated to the user. In Figure 6, there is shown a cemetery 100 with graves 101 and niches 102. Each of the graves 101 and niches 102 has their own output device 202 and there are a number of local computing devices 204A stationed in the cemetery 101 with their own output devices 202. A camera 205A of the broad mechanism 205 is also made available such that communication on the output devices 202 on the graves 101 or niches 102 is viewable on the output devices 202 of the local computing devices 204A.

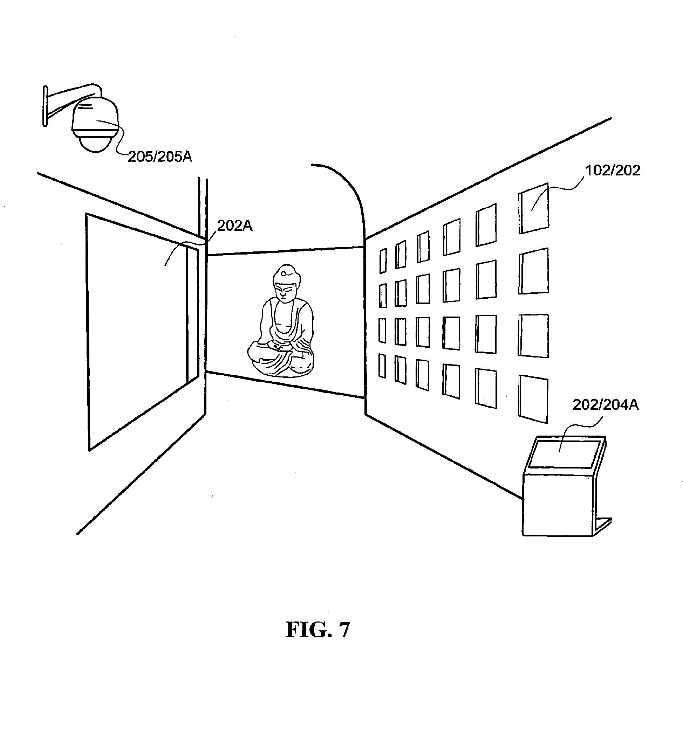

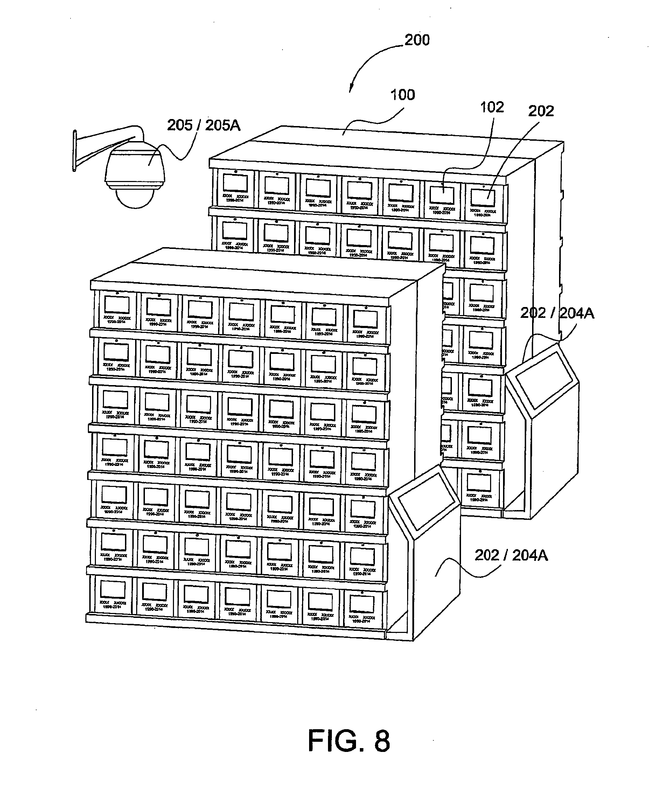

Referring to Figures 7 and 8, columbarium 100 of different styles are shown. Each of the niches 102 has their own output device 202 and there is a public output device 202A. A local computing device 204A stationed in the columbarium 101 is provided for sending request. It also has an output device 202 for communicating veneration in human perceivable form to a user. A camera 205A of the broad mechanism 205 is also made available such that communication on the output devices 202 on the niches 102 is viewable on the output devices 202 of the local computing devices 204A.

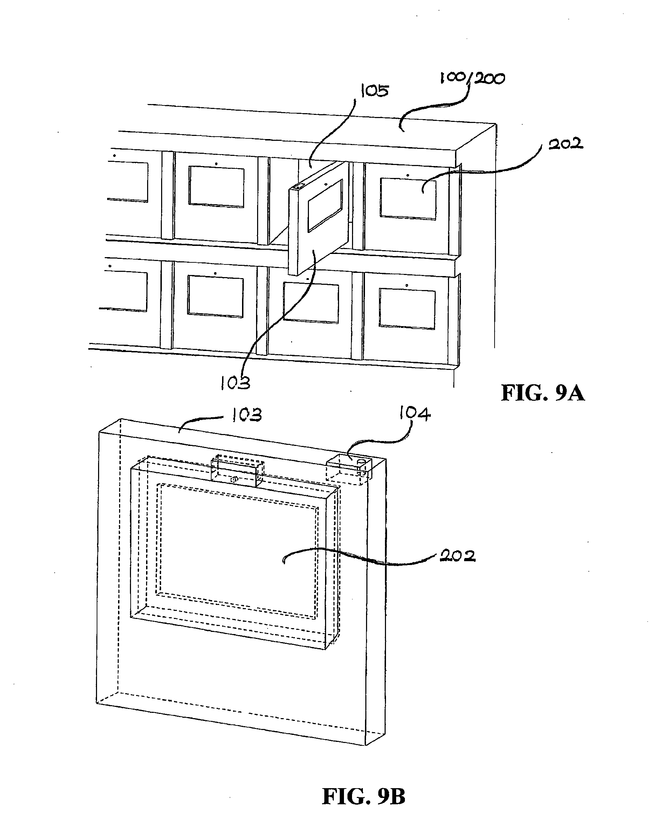

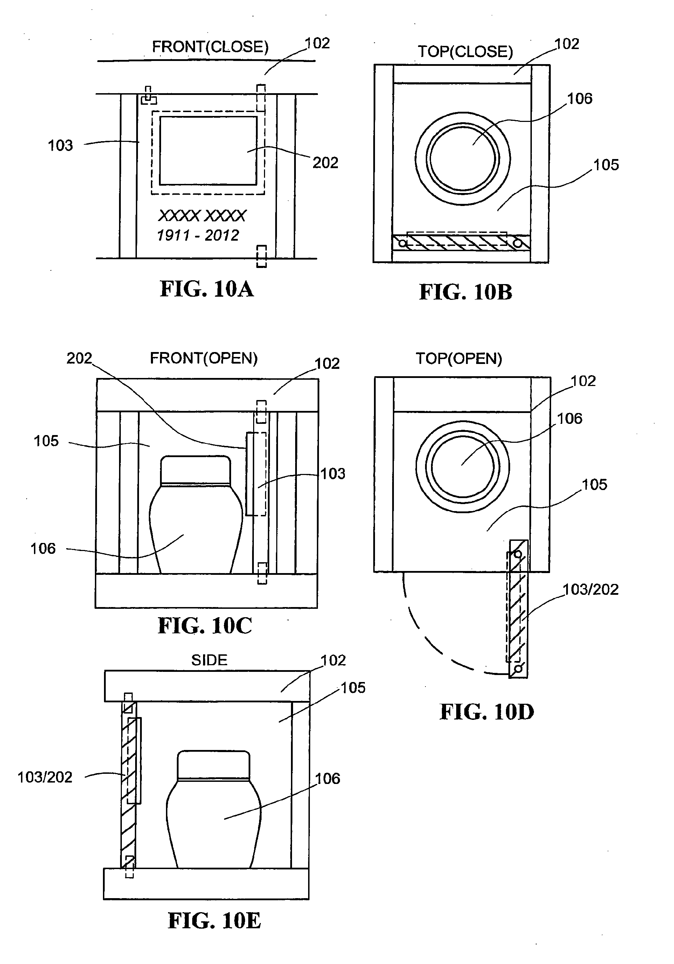

Figures 9 and 10 shows a typical niche 102 with the output device 202 installed on the front door 103. Behind the front door 103 there is a space 105 for storing the urn or any remains of the deceased 106. A lock 104 is provided to lock the front door 103 when it is shut.

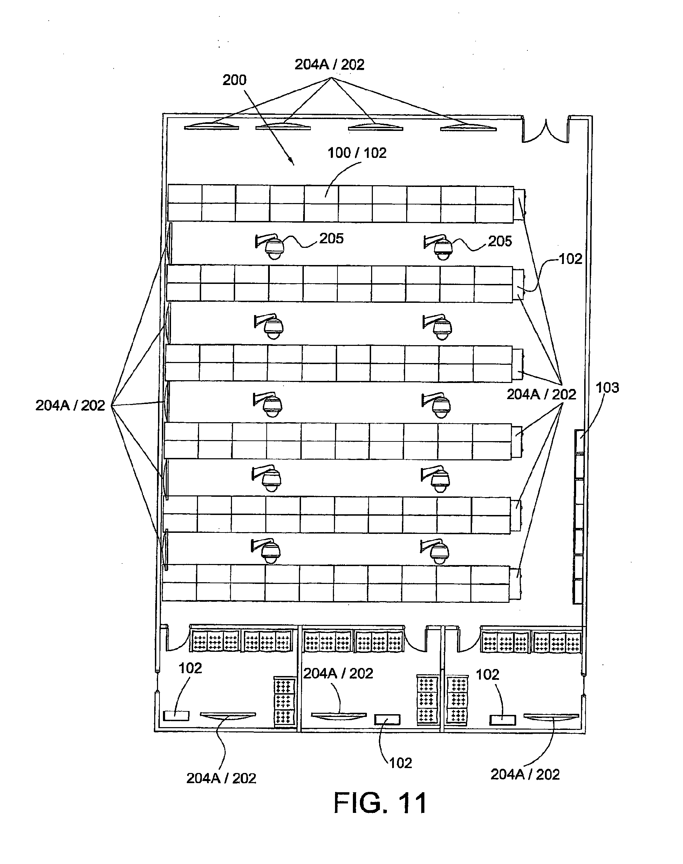

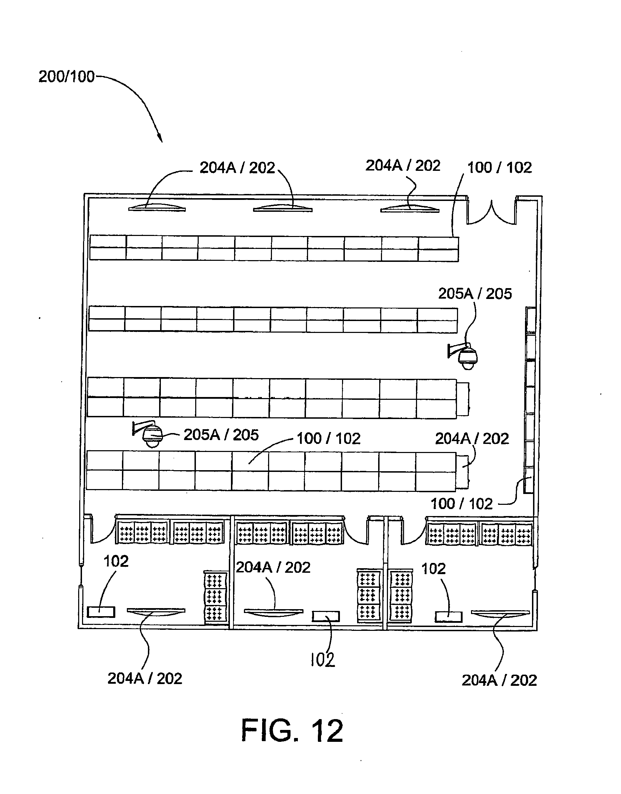

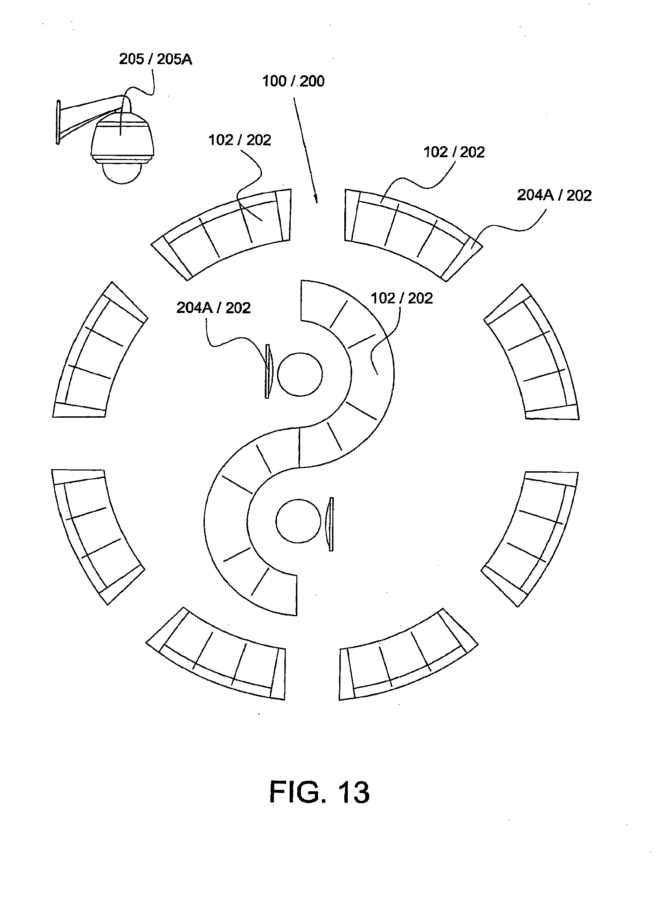

Figures 11 to 13 show various arrangements of columbarium 100 in different memorial facilities 100 implementing the system 200 or method.

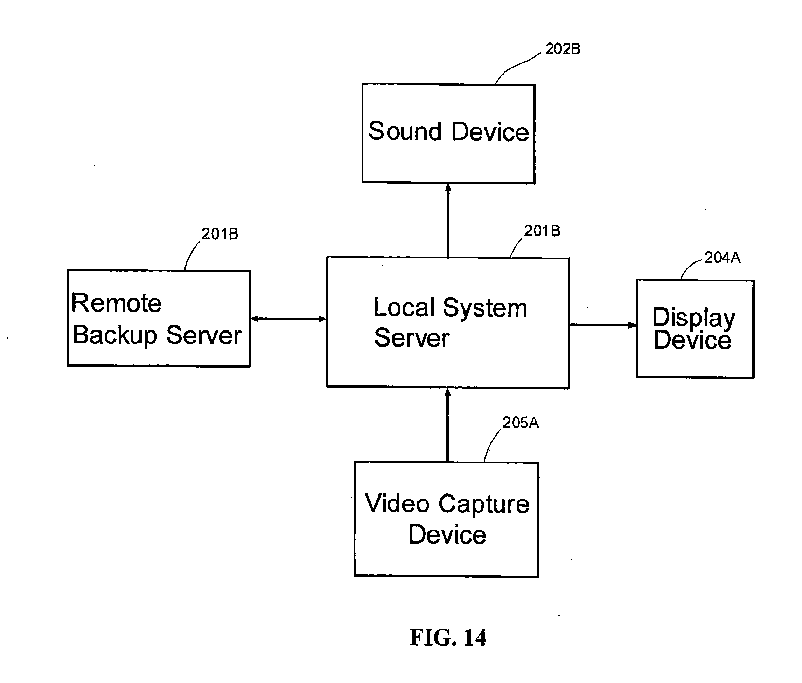

In more detail as shown in Figure 14, there are two servers, a local system server 201A and a remote backup server 201B. Preferably the local system server 201A is located in the vicinity of the memorial facility 100. The remote backup server 201B can be located anywhere accessible by the local system server 201A. The input device 205A, preferably a video capture device, of the broad mechanism 205 is connected to the local system server 201A. The local system server 201A is also in connection with the output devices 202 including video and audio outputs 202A and 202B.

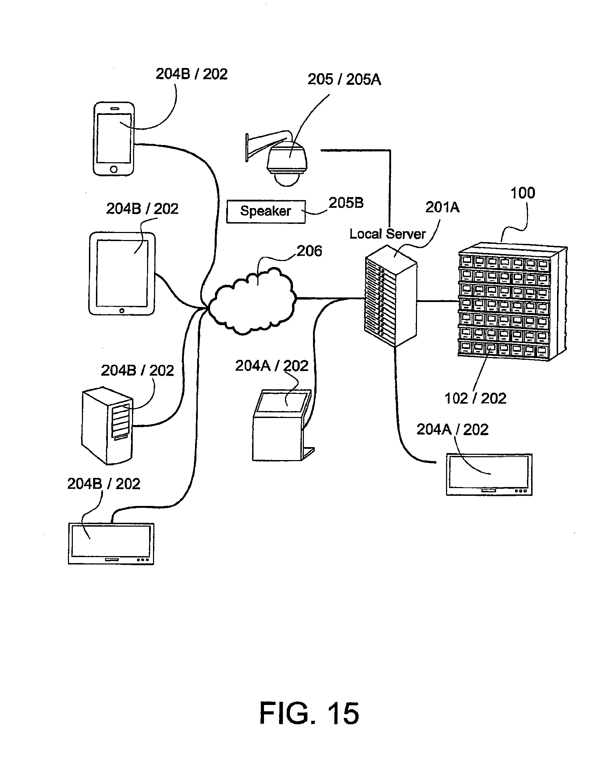

Referring now to Figure 15, the columbarium 100 includes plurality of niches 102. Each of these niches 102 is equipped with its own output device 202 for communicating personalized human-perceivable event. A plurality of output devices 202 are assigned to a respective deceased with remains interred in the memorial facility 100. These output devices 202 are accessible by local or remote computing device 204A and 204B. There is preferably a general or common local computing device 204A with its own output device 202 located at the columbarium 100 for communicating human-perceivable event to a group of people. The plurality of output devices 202 are selectively accessible by the general or common local computing device 204A. These computing devices 204A and their output devices 202 are all in connection with the local server 201A through a local computer network. The input device 205A of the broadcast mechanism 205 is also in connection with the local server 201A and is located in proximity to the output device 202 located at the memorial facility. The local server 201A is in connection with a computer network 206, for example, a telecommunication network or the internet accessible by the remote computing device 204B connectable with the system 200 remotely and preferably wirelessly. The input device 205A sends any captured human-perceivable event to the local server 201A which is then transmitted to the local computing devices 204A via local network and to the remote computing device 202B which may be an iPhone, iPad, a PC or a television via the telecommunication network or the internet. The computing device 204 allows the user to access the local server 201A and the input device 205A through the computer network 206. The local server 201A includes the data storage 203, the transmitter and the data processing unit. The data storage 203 contains various data content which is selectable by the local and remote computing device 204A for conversion into a human-perceivable event by the data processing unit and transmissible by the transmitter to the output device 202 for communication. These data comprise data related to the deceased, related to the family and/or data related to veneration acts for the deceased. The selected group of data is converted into human-perceivable event by the information processing system and transmittable by the transmitter to the output device 202 for communication to the viewer or user.

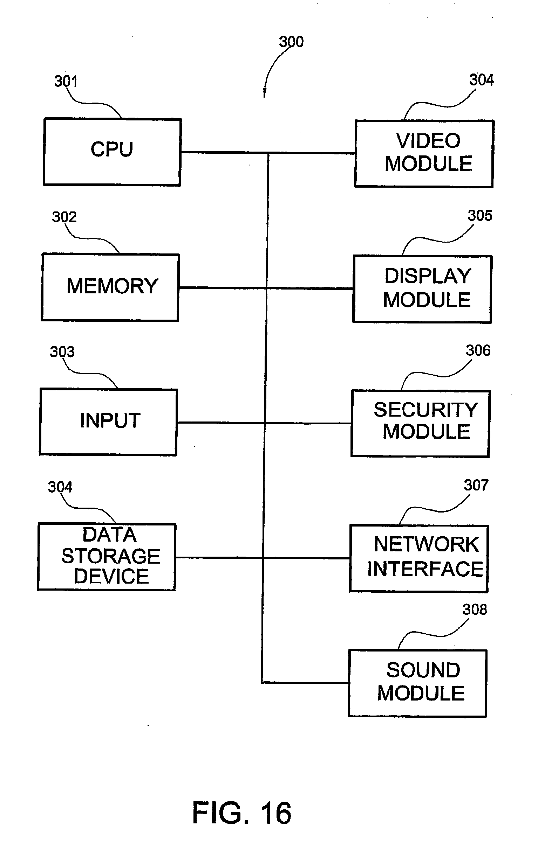

Referring to Figure 16, a computer system 300 employed by the invention includes a central processor unit 301 for executing any input command from the local and/or remote computing devices 204A and 204B; a temporary memory 302 for storing the input command and relevant data; an input module 303 for receiving instructions from the local and/or remote computing devices 204A and 204B and controls a plurality of input devices 205A and 205B; a data storage 205 where various data content for commemoration of the deceased are stored; a video module 304 for streaming video data across a plurality of output devices 202; a display module 305 that controls a plurality of output devices 202 and responsible for streaming video and image across a plurality of output devices 202; a security module 306 is provided for controlling access of the user utilizing the system 200; a network interface 307 is provided for controlling communication between systems 200 and for taking the requests of the remote computing devices 204A; and a sound module 308 responsible for controlling that controls a plurality of output devices 202 and responsible for streaming audio data across a plurality of output devices 202.

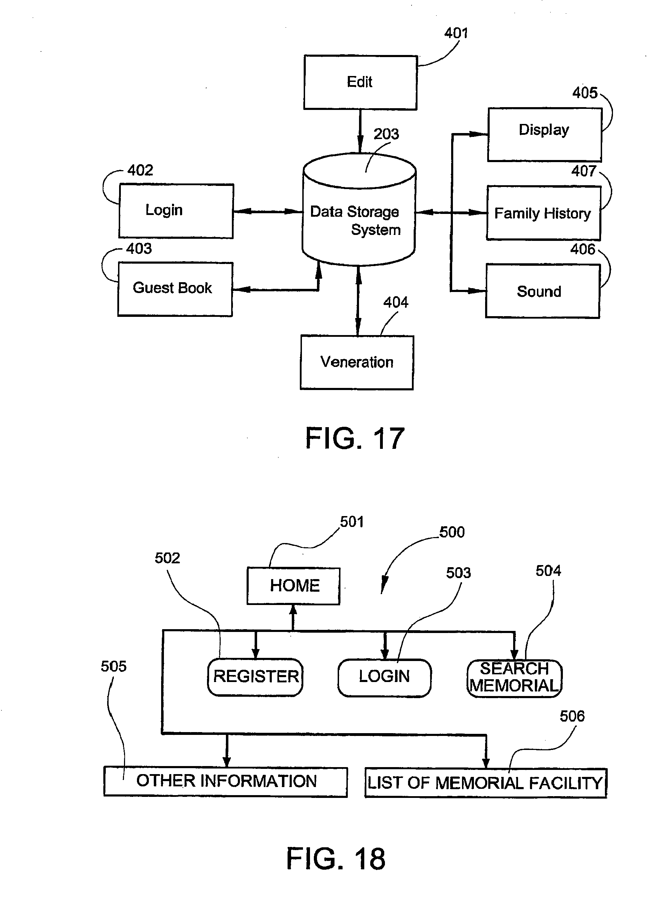

Referring to Figure 17, the data storage 205 has an edit module 401 that permits authorized user to manipulate, such as adding, changing and deleting, the data stored in the data storage 205; a login module 402 that verify the identity of the authorized user logging into the system 200 and the data storage 205; a guest book module 403 that allow any user to enter, change and delete information concerning themselves to the data storage 205; a veneration module 404 contains a selection of acts of veneration and allows any user to select and perform a selected virtual act of veneration to the deceased which may be communicated by the output device 202; a display module 405 and a sound module 406 which allows the relevant visual and audio display selected by the user to be communicated by the output device 202. Each act of veneration may have a specific set of visual and audio display which can be communicated by the output device 202 with the aid of the visual and audio modules 305 and 309; a family history module 407 which contains information of the family history of the deceased and may be selected for display on the output device 202 upon request of the user. Any of the aforementioned modules may be added or removed from the data storage 205 such that a system 200 for a deceased may be customized by the authorized user.

Figure 18 provides a block diagram of the main user interface 500 displayed on the local and remote computing devices 204A and 204B. It includes home 501 which display generic information of the system 200, register 502 that provides registration function for user; login 503 for user to log into the system 200; search 504 which allows the user to perform searches through a public information database such as a list of deceased person in the system 200; other information 505 allows other information of the system 200 to be listed; list of memorial facility 506 allows different memorial facilities located globally and in connection to the system 200 to be listed in the system 200 and become accessible by the user.

After logging into the system 200 through the interface as shown in Figure 18, there will be an authentication process 601 to verify the identity of the user. If authentication fails, the user will be redirected to retrieving and/or resetting the password 602 and 603 and to the home page 501 of the system 200. If authentication is successful, the user will be directed to a main private page 605 with some information of the deceased being displayed and some other information of the deceased become accessible by clicking various buttons, including info 606, video 607, photo 608, family tree 609, guess book (blog) 610, edit 611, veneration 612 and view site 613. When the info button 606 is clicked, the user is directed to detailed information of the deceased; when the video button 607 is clicked, videos of the deceased become available; when the photo button 608 is clicked, photos of the deceased is displayed; when the family tree button 609 is clicked, the family tree of the deceased is displayed; when the guess book button 610 is clicked, the user can enter information, leave messages 619 and upload media files 620 into the guess book module 403 of the data storage 205 to the system 200 and share the entered information in social media network such as "Facebook", "twitter" and the like 621, upon completion of the process, information will be updated in the database and be displayed on the main private page 605; when the edit button 611 is clicked, verification of the identity of the user 614 is conducted and if the user is the administrator of the main private page 605, editing 615 becomes available to allow the user to edit media files and information on the page. After the editing process is completed, the edited files 616 and information 617 will automatically be uploaded 618; when the veneration button 612 is clicked, the various acts of veneration become available for selection by accessing the data storage 205 containing data useful for commemoration of the deceased including lighted candles, flowers, toys, etc. This will be discussed further in the following paragraph; when the view site button 613 is clicked, remote viewing by the computing device 204 of the memorial facility and/or the communication of the output device 202 and/or streaming a copy of the human-perceivable event for viewing from the computing device 204.

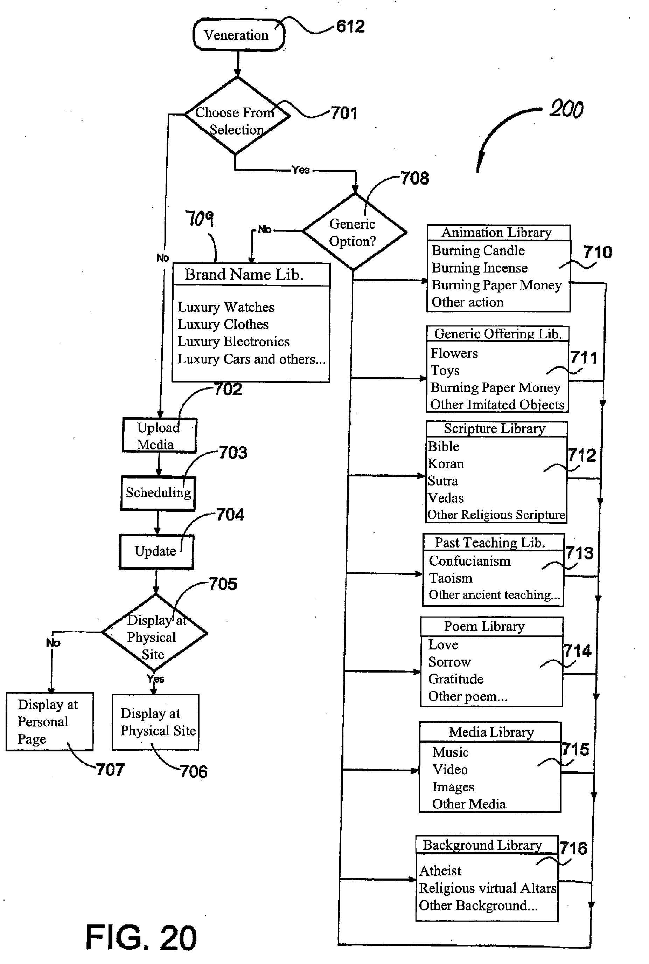

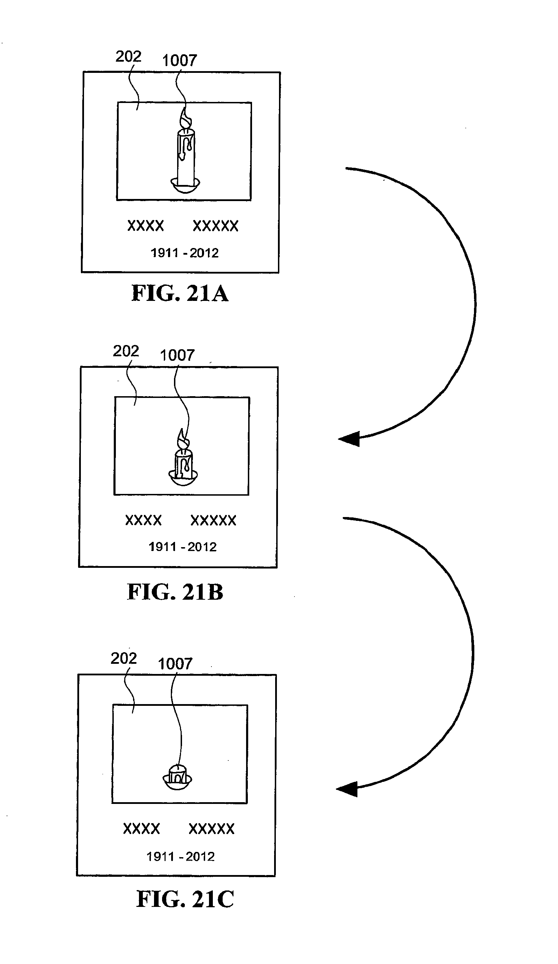

One of the main features of the system 200 or method of the invention is the veneration function which becomes available when the veneration button 612 is clicked. Referring to Figure 20, a preferred embodiment of the veneration function of the invention is shown. Once the veneration button 612 is clicked, a list of preset acts of veneration 701 becomes available for selection. It is also possible to not select from the list but venerate in a customized way. If the user decided to venerate in a customized way, user is prompted to an upload media route 702 for uploading information such as images, photos, etc. After uploading, the scheduling function 703 is initiated to schedule an update 704 on the data storage 205. Once updating has been completed, the user will be allowed to select 705 whether to display the uploaded information on the output device 202. If yes, the uploaded information will be displayed on the output device 202 at the physical site instantly 706 as shown in Figures 21 to 23. If no, the information will simply be displayed as part of the private main page 605 on the output device 202, 707. If the user decided to select one of the preset acts of veneration in the list 701, the user is allowed to select whether to venerate in conventional/generic way as shown in block 708. If the user decided to venerate in a nonconventional/generic way, he will be directed to a brand name library 709 where a list of brand name luxury items becomes available for selection as offerings. If the user decided to venerate in a conventional/generic way, he will be directed to a list of libraries including an animation library 710, a generic offering library 711, a scripture library 712, a past teaching library 713, a poem library 714, a media library 715 and a background library 716. When the animation library 710 is selected, the preset acts of venerations in the form of video animation e.g. burning candle, burning incense, burning paper money, etc. stored in the data storage 205 becomes available for selection and display on the output device 202. When the generic offering library 711 is selected, the preset acts of veneration in the form of image e.g. flowers, toys, burning paper money, etc. becomes available for display on the output device 202. When the scripture library 712 is selected, the preset acts of veneration in the form of scripture image of e.g. Bible, Koran, Sutra, Vedas, etc. becomes available for display on the output device 202. When the past teaching library 713 is selected, passage of Confucianism, Taoism and other teachings in the form of image becomes available for display. When the poem library 714 is selected, poems in the form of image become available for display on the output device 202. When the media library 715 is selected, music, video, images for example of the deceased and the user become available for display on the output device 202. When the background library 716 is selected, backgrounds in the form of atheist, religious virtual altars, etc. become available for display on the output device 202. After selection, the scheduling function 703 is initiated to schedule an update 704 on the data storage 205. Once updating has been completed, the user will be allowed to select 705 whether to display the uploaded information at a physical site on the output device 202. If yes, the uploaded information will be displayed on the physical site instantly as shown in Figures 21 to 23. If no, the information will simply be displayed as part of the private main page 605 on the output device 202.

### Example 1

Referring to Figures 21A to 21C, when the animation library 710 has been accessed and the burning candle option has been selected, a burning candle animation is showed on the output device 202. The output device 202 is in the form of an LCD.

### Example 2

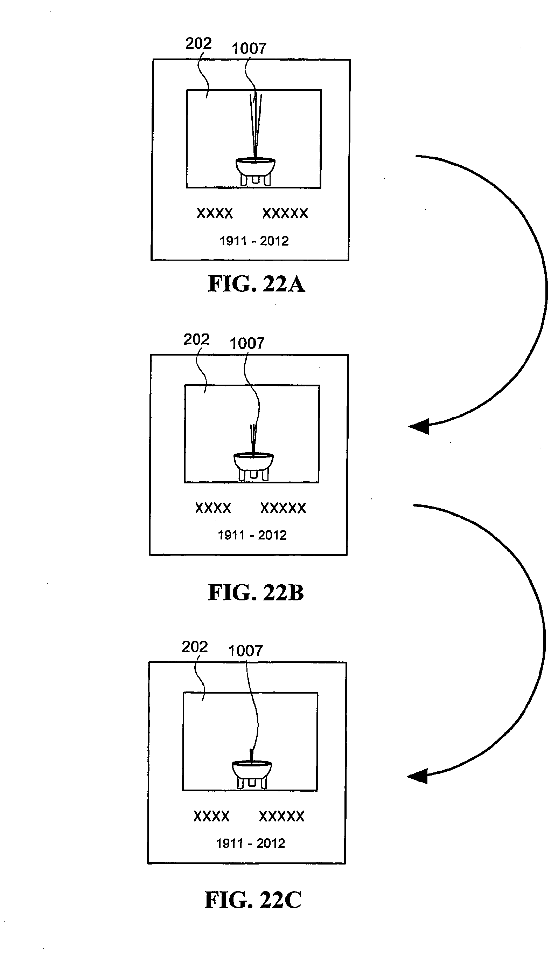

Referring to Figures 22A to 22C, when the animation library 710 has been accessed and the burning incense option has been selected, a burning incense animation is showed on the output device 202. The output device 202 is in the form of an LCD.

### Example 3

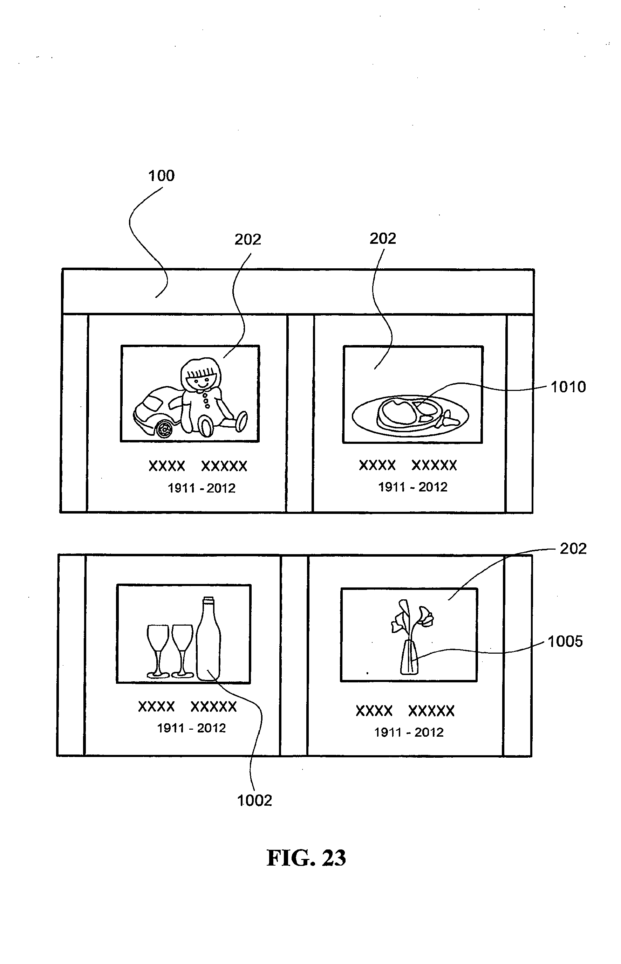

Referring to Figure 23, when the generic offering library 711 has been accessed and the toy, or steak 1010 or wine 1002 or flowers 1005 option has been selected, an image of the toy, steak 1010, wine 1002 or flowers 1005 is showed on the output device 202. The output device 202 is in the form of an LCD.

### Example 4

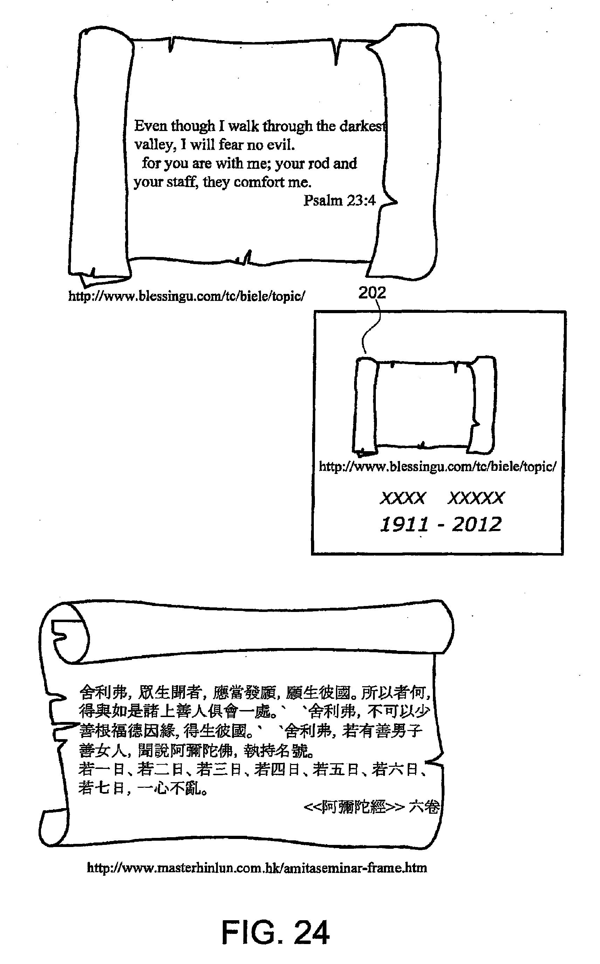

Referring to Figure 24, when the scripture library 712 has been accessed and a particular scripture is selected, an image of the scripture is showed on the output device 202. The output device 202 is in the form of an LCD. If preferred, the scripture may be shown as an animation with the scroll slowly opens and with words displayed one by one until the whole scripture is showed on the LCD 202.

### Example 5

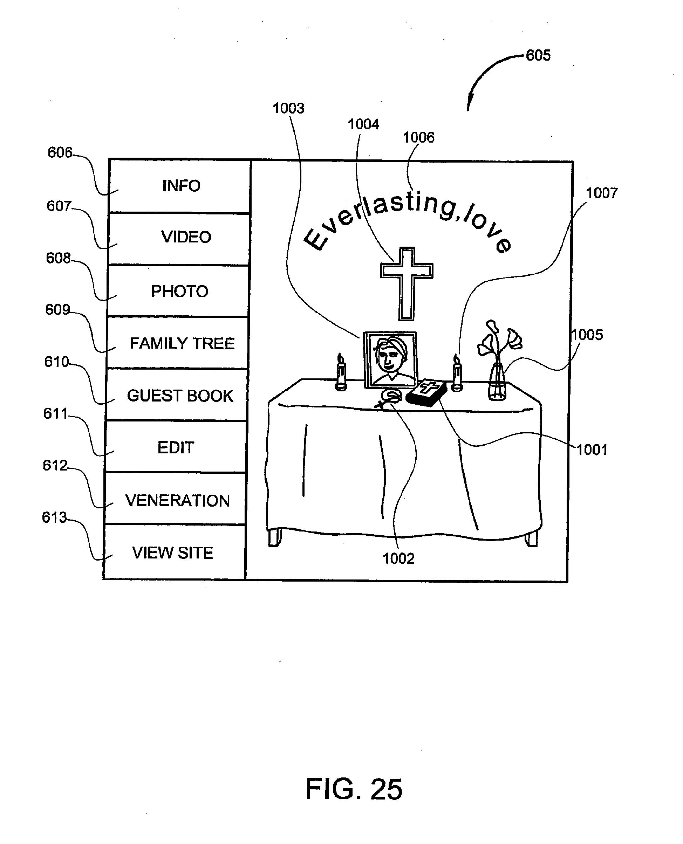

Referring to Figure 25, there is shown a customized main private page 605 for a niche of a deceased. The various buttons, including info 606, video 607, photo 608, family tree 609, guess book (blog) 610, edit 611, veneration 612 and view site 613 are aligned on the left. The photo of the deceased is placed on an altar 1008 with Christian settings. Veneration using burning candles are showed on the private main page 605 instantly after the burning candle option in the animation library 710 has been selected. Offerings such as bible 1001, rosary 1002, photo 1003, cross 1004, flowers 1005, some wordings 1006, candles 1007 are showed on the private main page instantly after these offering or veneration options in the generic offering library 711 have been selected.

### Example 6

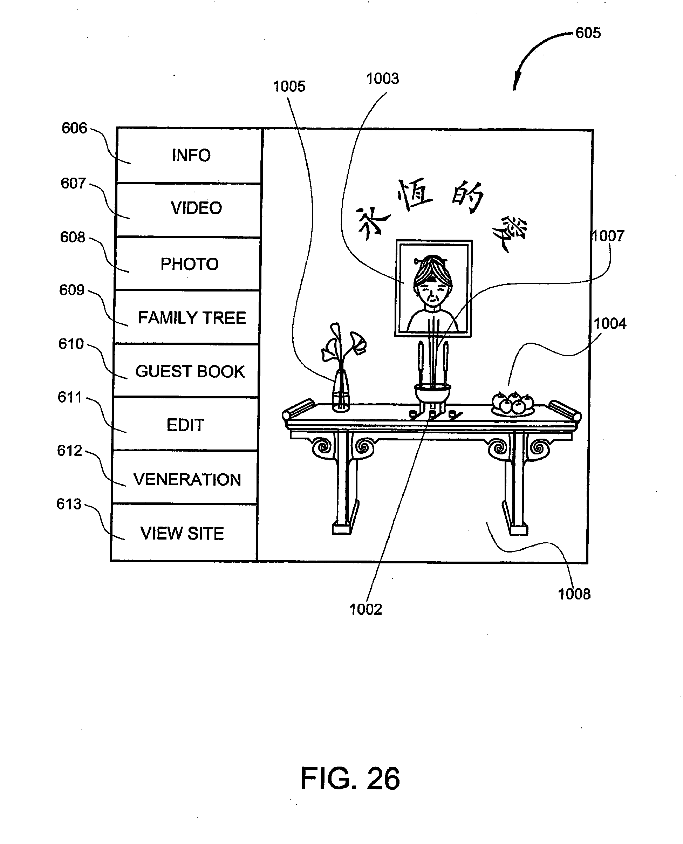

Referring to Figure 26, there is shown a customized main private page 605 for a niche of a deceased. The various buttons including info 606, video 607, photo 608, family tree 609, guess book (blog) 610, edit 611, veneration 612 and view site 613 are aligned on the left. The photo of the deceased is placed on an altar with traditional Chinese settings. Veneration using burning incenses and joysticks 1007 are showed on the private main page 605 instantly after the burning incense and burning joystick options in the animation library 710 have been selected. Offerings such as flowers 1005, fruits 1004, wine and chopsticks 1002, photo 1003 and wordings 1006 are showed on the private main page instantly after these offering or veneration options in the generic offering library 711 have been selected.

### Example 7

This is an example of the broad mechanism 205. Various private main page 605 settings are available for selection 2000 by using the computing devices 204A and 204B. Once decided, data of the selected setting is converted into human-perceivable event by the information processing system and then displayed on the output device 202 which is a LCD screen in front of the niche 102. A copy of the human-perceivable event is transmitted through the web server 201 and the internet or telecommunication network to the remote computing device 202B and transmitted by the transmitter e.g. cable to a local computing device 202A stationed in the memorial facility 100. Alternatively the broad mechanism 205 includes an input device in the form of a camera 205A which captures image of the information displayed on the output device 202 on the niche 102 and sent through the web server 201 and the internet or telecommunication network to the ipad 202B and the local computing device 204A stationed in the memorial facility 100 through the local network / intranet. The local computing device 204A is preferably a smart TV. That way, there will be a synchronized veneration between the output device 202 on the niche 102, the output device 202 on the local computing device 204A and the output device on the remote computing device 204B.

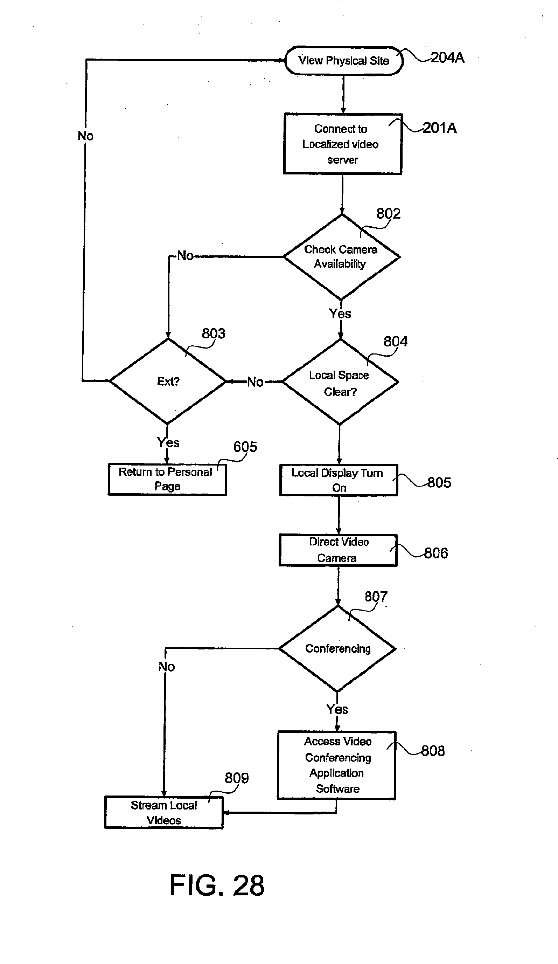

Referring to Figure 28, a flow chart of feedback function performed by the broad mechanism 205 is illustrated. Access to the system 200 is possible by the ipad 202B through the internet or telecommunication network and the web server 201. Once the ipad 202B is logged into the system 200, the user may choose to view the niche 102 by connecting to a local video server 201A which then checks camera 205A availability 802. If the camera 205A is not available, the user may exit the broad mechanism 205 by clicking the exit button in step 803 the user is redirected to the private main page 605 if not, the user is directed back to a page where the user may again choose to view the niche 102. If the camera 205A is available, a security check 804 will be performed to ensure that no other unrelated user is within the coverage area of that camera 205A. If other unrelated user is within the coverage area of the camera 205A the user may exit the broad mechanism 205 by clicking the exit button in step 803. If no other unrelated user is within the coverage area of the camera 205A, the local output device 202A is turned on 805 if not already on, the camera 205A is moved 806 to direct at the subject niche 102. Teleconferencing is available for multiple users. A teleconferencing function 807 may activated by the user for accessing video conferencing application software 808 which allows more than one user to view the subject niche 102. If the teleconferencing function 807 is activated, the system 200 access available video conferencing applications such as Skype, "OoVoo" and the like. The image captured by the camera 205A is then streamed to various remote computing devices 204A for viewing by the users through these applications. If the teleconferencing function 807 is not activated, the image captured by the camera 205A is streamed to the iPad 202B for viewing by the one user.

### Example 8

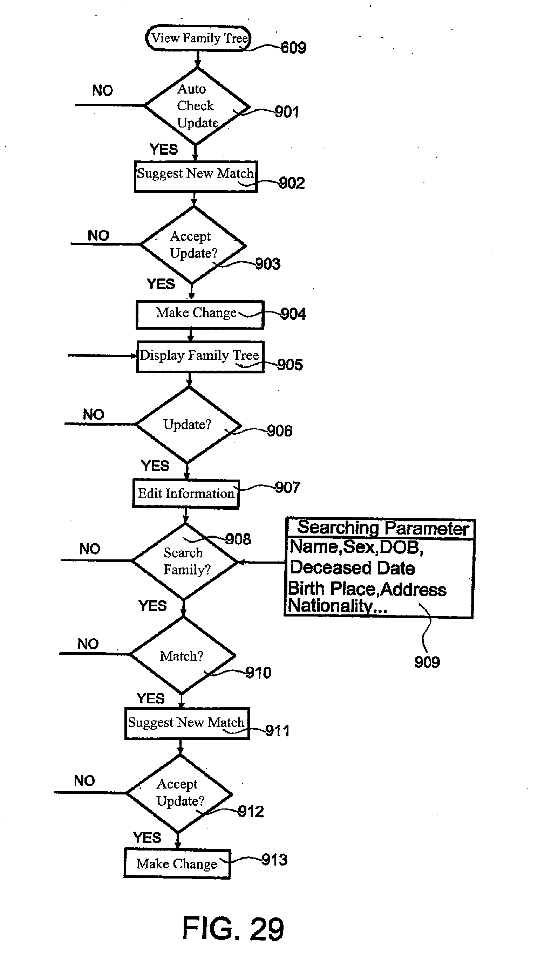

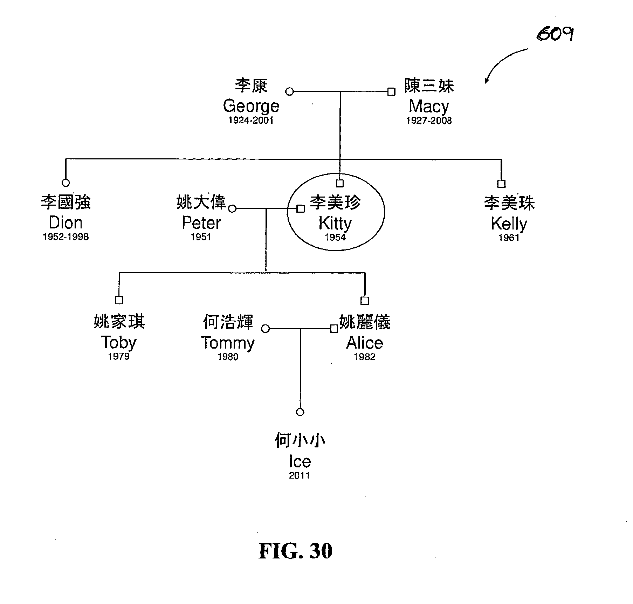

Figure 29 is a flow chart that illustrates various functions in relation to the family tree 609. Once the user enters the family tree 609, an optional function known as auto check update function 901 is available for informing the user of any new family member being entered into the family tree 609. If the function 901 is not selected, the user is directed to the display of family tree 905. If the function 901 is selected, possible match of new member will be displayed in step 902 and the user can accept the new member by updating the family tree in step 903. The family tree 609 may then be updated in step 904 and the updated family tree 609 will be displayed in step 905. Once the family tree 609 or the updated family tree 609 is displayed, the user may edit information in the family tree 609 in step 906 and enters the information in step 907. It is possible to search for family member to be added to the family tree 609 in step 908 by entering search parameters such as name, sex, etc. 909. If there is a match as in step 910, a suggestion will be made to the user 911. The user may choose to accept or not accept the match in 912. Changes to the family tree 609 may be made by clicking the change button in 913. A typical family tree 609 displayed in the system 200 is shown in Figure 30.

In a different aspect of the invention, it relates to a method of remote commemoration of the deceased with remains interred in the memorial facility 100, through the use of a computing device 204. This is a method of implementing the system 200 as detailed above. The method includes the steps of (a)providing a computer server 201 to serve a request of said computing device 204; (b)
providing a data storage 203 for storing data useful for commemoration of the deceased, the data storage 203 being accessible by said computing device 204 under the control of the computer server 201; (c) providing a data processing unit to convert data from the data storage 203 into a human-perceivable event; (d) providing a transmitter to transmit a said human-perceivable event to the memorial facility 100. The human-perceivable event is controllable by means of said computing device 204; and (e)
providing an output device 202 at the memorial facility 100 to communicate a said human-perceivable event transmitted by the transmitter. It may further comprise the step of providing a computing device 204 which may be a local or remote computing device 204A and 204B as detailed above. In a further embodiment of the invention, it may include the step of providing a broadcast mechanism 205 which captures a said human-perceivable event communicated by the output device 202 located at the memorial facility and sends a captured human-perceivable event to the computing device 204 via the communication network. All the detailed description in relation to features of the system 200 is applicable to features of this method.

The invention has been given by way of example only, and various other modifications of and/or alterations to the described embodiment may be made by persons skilled in the art without departing from the scope of the invention as specified in the appended claims.

## Claims

1. A commemoration system for remote commemoration of the deceased with remains interred in a memorial facility, comprising:
a computer server to serve a request of a computing device;
a data storage for storing data useful for commemoration of the deceased, the data storage being accessible by said computing device under the control of the computer server;
a data processing unit for converting data from the data storage into a human-perceivable event;
a transmitter for transmitting a said human-perceivable event to the memorial facility, said human-perceivable event being controllable by means of said computing device; and
an output device at the memorial facility for communicating a said human-perceivable event transmitted by the transmitter,
optionally, wherein the data in the data storage is capable of being added, edited and deleted by a user by means of the computing device,
optionally, wherein the data useful for commemoration of the deceased comprises various data content which is selectable by the computing device for conversion into a human-perceivable event by the data processing unit and transmissible by the transmitter to the output device for communication, and
optionally, wherein the data comprises data relating to the deceased and the deceased's family and data relating to offering.

2. The commemoration system as claimed in claim 1, wherein the output device comprises a plurality of output devices located in the vicinity of the memorial facility, each being assigned to a respective deceased with remains interred in the memorial facility.

3. The commemoration system as claimed in claim 1 or claim 2 further comprising a computing device.

4. The commemoration system as claimed in claim 3, wherein the computing device includes an output device.

5. The commemoration system as claimed in claim 3 or claim 4, when dependent from claim 2, wherein the plurality of output devices located at the memorial facility are accessible by the computing device.

6. The commemoration system as claimed in claim 2 or any one of claims 3 to 5 when dependent on claim 2, including a common computing device located at the memorial facility, by which the plurality of output devices are selectively accessible.

7. The commemoration system as claimed in any one of claims 3 to 6, wherein the computing device comprises a remote computing device connectable with the system via a communication network.

8. The commemoration system as claimed in any one of claims 3 to 7, further comprising a broadcast mechanism which captures a said human-perceivable event communicated by the output device located at the memorial facility and sends a captured human-perceivable event to the computing device via the communication network,
optionally, wherein the broadcast mechanism comprises an input device for capturing a said human-perceivable event communicated by the output device located at the memorial facility,
optionally, wherein the input device is located in proximity to the output device located at the memorial facility, and
optionally, wherein the input device comprises a camera.

9. The commemoration system as claimed in any one of claim 7 or claim 8, wherein the remote computing device comprises a third party computing device.

10. The commemoration system as claimed in any one of claims 7 to 9, wherein the communication network comprises the internet or a telecommunication network.

11. The commemoration system as claimed in any one of claims 1 to 10, wherein the computer server comprises a web server,
optionally, wherein the output device comprises a visual display capable of communicating animation, and
optionally, wherein the output device comprises an audio display.

12. A method of remote commemoration of the deceased with remains interred in a memorial facility, through the use of a computing device, comprising the steps of:
(a) providing a computer server to serve a request of said computing device;
(b) providing a data storage for storing data useful for commemoration of the deceased, the data storage being accessible by said computing device under the control of the computer server;
(c) providing a data processing unit to convert data from the data storage into a human-perceivable event;
(d) providing a transmitter to transmit a said human-perceivable event to the memorial facility, said human-perceivable event being controllable by means of said computing device; and
(e) providing an output device at the memorial facility to communicate a said human-perceivable event transmitted by the transmitter,
optionally, wherein the computer server comprises a web server,
optionally, wherein the output device comprises a visual display capable of communicating animation, and
optionally, wherein the output device comprises an audio display.

13. The method as claimed in claim 12, wherein the output device comprises a plurality of output devices located in the vicinity of the memorial facility, each being assigned to a respective deceased with remains interred in the memorial facility.

14. The method as claimed in claim 12 or 13, further comprising the step of providing a computing device.

15. The method as claimed in claim 14, wherein the computing device includes an output device.

16. The method as claimed in claim 14 or claim 15, when dependent from claim 21, wherein the plurality of output devices located at the memorial facility are accessible by the computing device.

17. The method as claimed in claim 13 or any one of claim 14 to 16 when dependent to claim 14, comprising the step of providing a common computing device located at the memorial facility, by which the plurality of output devices are selectively accessible.

18. The method as claimed in any one of claims 14 to 17, wherein the computing device comprises a remote computing device connectable with the system via a communication network.

19. The method as claimed in any one of claims 14 to 18, further comprising the step of providing a broadcast mechanism which captures a said human-perceivable event communicated by the output device located at the memorial facility and sends a captured human-perceivable event to the computing device via the communication network,
optionally Wherein the broadcast mechanism comprises an input device for capturing a said human-perceivable event communicated by the output device located at the memorial facility,
optionally, wherein the input device is located in proximity to the output device located at the memorial facility, and
optionally, wherein the input device comprises a camera.

20. The method as claimed in any one of claim 18 or claim 19, wherein the remote computing device comprises a third party computing device.

21. The method as claimed in any one of claims 12 to 20, wherein the data in the data storage is capable of being added, edited and deleted by a user by means of the computing device,
optionally, wherein the data useful for commemoration of the deceased comprises various data content which is selectable by the computing device for conversion into a human-perceivable event by the data processing unit and transmissible by the transmitter to the output device for communication,
optionally, wherein the data comprises data relating to the deceased and the deceased's family and data relating to offering, and
optionally, wherein the communication network comprises the internet or a telecommunication network
